# EUROPÄISCHE PATENTSCHRIFT

(11) **EP 2 264 496 B1**
(45) Veröffentlichungstag und Bekanntmachung des Hinweises auf die Patenterteilung: **12.02.2020**
(21) Anmeldenummer: 10165836.7
(22) Anmeldetag: 14.06.2010
(51) Int. Cl.: G02B 6/35, G01D 5/30, G01D 5/347

(54) **Elektro-optischer Signalgeber**
Electrical optical signaller
Emetteur de signal électro-optique

(30) Priorität: 19.06.2009 DE 102009025595
(43) Veröffentlichungstag der Anmeldung: 22.12.2010
(73) Patentinhaber: Brendel Holding GmbH & Co. KG, 74564 Crailsheim (DE)
(72) Erfinder: Brendel, Wolfgang, 74564 Crailsheim (DE)
(74) Vertreter: Weickmann & Weickmann PartmbB

(56) Entgegenhaltungen:
- EP-A2- 0 838 777
- WO-A2-2007/122549
- WO-A2-2008/105021
- DE-U1- 29 817 668
- GB-A- 2 339 469

## Beschreibung

Die Erfindung betrifft einen elektro-optischen Signalgeber mit den Merkmalen des Oberbegriffs von Anspruch 1, mit einem ersten Element und einem relativ zu diesem bewegbaren zweiten Element, wobei das erste Element zumindest eine Strahlungsquelle und auf die von der Strahlungsquelle abgegebene Strahlung ansprechende Sensoren aufweist, insbesondere, aber nicht ausschließlich, zur Verwendung von einem Fernsteuerungsbedienungselement, zur insbesondere drahtlosen Fernsteuerung einer Maschine, wie etwa eines Krans. Insbesondere liefert der Signalgeber ein Ausgabesignal, wie etwa eine Spannung und/oder Widerstandsänderung oder dgl., in Abhängigkeit von der relativen Verlagerung zwischen erstem und zweitem Element.

Hierzu sind die unterschiedlichsten Schalter oder Signalgeber oder Bedienungselemente bekannt, wie z.B. potentiometrische Signalgeber mit einer Widerstands- bzw. Spannungsänderung, die aber durch die erforderlichen Kontakte einer mechanischen Beanspruchung und somit Verschleiß unterliegen. Auch bekannt sind induktiv arbeitende Sensoren, die im Wesentlichen kontaktlos arbeiten, jedoch nicht frei von äußeren Einwirkungen sind, wie etwa Magnetfeldern. Dies gilt im Wesentlichen auch für kapazitive Kontakt- oder Signalgeber. Auch bekannt sind optoelektrische Sensoren und Signalgeber, die im Wesentlichen nach dem Lichtschrankenprinzip funktionieren und somit verschleißfrei sind, aber in der Regel nur zwei Signalzustände kennen, da die Blende zwischen Lichtquelle und Sensor in der Regel nur in einer Richtung bewegbar ist, ohne Zwischenstellungen zu erkennen oder relative Bewegungen zwischen Blende einerseits und Lichtquelle und Sensor andererseits in mehreren Freiheitsgraden zu gestatten.

Aus der Druckschrift WO 2007/122549 A2 sind einige gattungsgemäße Signalgeber bekannt, bei denen das zweite Element beispielsweise in der Art eines Joysticks gegenüber dem ersten Element verstellbar, nicht jedoch um seine Längsachse drehbar ist.

Weiterhin offenbart die Druckschrift WO 2008/105021 A2 einen Signalgeber mit einem ersten Element und einem zweiten Element, das um seine Längsachse relativ zu dem ersten Element drehbar vorgesehen ist. Das erste Element umfasst eine Strahlungsquelle und zwei beidseitig davon vorgesehene optische Positionssensoren, das zweite Element umfasst einen Spiegel als Strahlenumlenkelement, der die von der Strahlungsquelle abgegebene Strahlung in Abhängigkeit von der relativen Drehstellung des zweiten Elements auf unterschiedliche Bereiche der optischen Positionssensoren umlenkt.

Aufgabe der Erfindung ist es daher, die bekannten Signalgeber so weiter zu entwickeln, dass eine relative Verstellung zwischen erstem und zweitem Element in mehr Freiheitsgraden erkannt werden kann.

Zur Lösung der Aufgabe wird ein Signalgeber mit den Merkmalen von Anspruch 1 vorgeschlagen, mit einem ersten Element und einem relativ zu diesem bewegbaren zweiten Element, wobei das erste Element zumindest eine Strahlungsquelle und zumindest einen auf die von der Strahlungsquelle abgegebene Strahlung ansprechenden Sensor aufweist, und das zweite Element ein Strahlenumlenkelement aufweist, das die von der Strahlungsquelle abgegebene Strahlung in Abhängigkeit von der relativen Stellung zwischen dem ersten Element und dem zweiten Element oder Strahlenumlenkelement zu dem Sensor hin oder von dem Sensor weg umlenkt.

Weil die Strahlungsquelle, z.B. eine Lichtquelle, wie etwa eine Licht emittierende Diode (LED) und der Sensor (z.B. eine Fotodiode oder dgl.) beide am ersten Element angebracht sind, bleibt deren relative Positionierung auch bei rauer mechanischer Behandlung des Signalgebers dauerhaft erhalten. Das zweite Element enthält lediglich das Strahlenumlenkelement, z.B. einen Spiegel oder dgl., und kommt somit ohne elektrische Teile aus. Dies vermeidet bewegliche elektrische Verbindungen zwischen erstem und zweitem Element, z.B. flexible Drähte oder Schleifkontakte, welche brechen könnten und verschleißanfällig sind.

Die Grundkonstruktion des Signalgebers erlaubt Varianten, in denen die relative Verlagerung zwischen erstem und zweitem Element proportional ausgewertet werden kann und/oder auch mehrere Freiheitsgrade erfasst werden können.

Erfindungsgemäß ist an dem ersten Element eine Mehrzahl von Sensoren derart angeordnet, dass die von dem Strahlenumlenkelement umgelenkte Strahlung in Abhängigkeit von der relativen Stellung zwischen dem ersten Element und dem zweiten Element oder Strahlenumlenkelement auf einen der Sensoren oder eine Teilgruppe der Sensoren oder von diesen weggelenkt wird.

Je nach Grad oder Stärke der relativen Verlagerung zwischen erstem und zweitem Element - etwa der relativen Winkelstellung oder einer relativen translatorischen Verlagerung dazwischen - lenkt das Strahlenumlenkelement die von der Strahlungsquelle erhaltene Strahlung auf einen anderen der mehreren Sensoren oder auf eine unterschiedliche Anzahl von Sensoren oder Teilgruppen davon, so dass aus dem entstehenden Signalmuster der jeweiligen Sensorsignale auf den Grad der relativen Verlagerung zwischen erstem und zweitem Element geschlossen werden kann, im Sinne einer proportionalen Auswertung. Je mehr Sensoren vorhanden sind, desto genauer die Auflösung.

Werden bei einem jeweiligen Verlagerungsgrad mehrere Sensoren oder Teilgruppen davon gleichzeitig angeregt, kann man aus einem Vergleich der Signale dieser Sensoren oder Teilgruppen die Funktionsfähigkeit des Signalgebers auswerten. Auch erhält man eine Signalredundanz, so dass der Signalgeber grundsätzlich auch dann betriebsfähig bleibt, wenn einer der Sensoren ausfallen sollte.

Bevorzugt ist die Mehrzahl der Sensoren in einer Reihe mit der Strahlungsquelle angeordnet. Dies gestattet eine einfache Herstellung und eine einfachere Signalauswertung, da dann der Grad der relativen Verlagerung zwischen erstem und zweitem Element zu einer proportionalen Änderung der Sensorsignale führt und entsprechend ausgewertet werden kann.

Erfindungsgemäß sind die Mehrzahl der Sensoren in einer Richtung aufgereiht, die der relativen Bewegungsrichtung zwischen dem ersten Element und dem zweiten Element oder Strahlenumlenkelement entspricht.

Bevorzugt sind die Mehrzahl der Sensoren in zumindest zwei nebeneinander liegenden Reihen entlang jener Richtung aufgereiht, die der relativen Bewegungsrichtung zwischen dem ersten Element und dem zweiten Element oder Strahlenumlenkelement entspricht, wobei insbesondere in einer Auswerteschaltung die von den Sensoren beider Reihen ausgegebenen Signale verglichen werden, und dann, wenn die verglichenen Signale außerhalb vorgegebener Toleranzen liegen, ein Fehlersignal ausgegeben wird. Bei einer bestimmten relativen Verlagerung von erstem und zweitem Element werden ein bestimmter Sensor oder eine Sensorteilgruppe der ersten Reihe und ein bestimmter Sensor oder eine bestimmte Sensorteilgruppe der zweiten Reihe gleichzeitig angeregt. Hierdurch erhält man eine Signalredundanz zugunsten höherer Funktionssicherheit. Durch Vergleich der jeweiligen Signale lässt sich aber auch auf die Funktionsfähigkeit des Signalgebers schließen. Wenn die sich ergebenden Signale einen deutlichen Unterschied zeigen, d. h. außerhalb vorbestimmter Toleranzen liegen, dann kann ein Fehlersignal ausgegeben werden, woraufhin z.B. die vom Signalgeber bediente Vorrichtung, z.B. ein Kran, in einen Not-Stopp-Zustand versetzt werden kann.

Der Signalgeber kann so ausgestaltet sein, dass sich das erste Element nur in einer Richtung relativ zum zweiten Element entlang einer Ebene, d. h. einem Freiheitsgrad, bewegen lässt. Bevorzugt sind aber die Mehrzahl der Sensoren in zumindest zwei sich in unterschiedliche Richtungen erstreckende Reihen gruppiert, und das erste Element ist relativ zum zweiten Element oder Strahlenumlenkelement in Richtung der jeweiligen Reihen bewegbar.

Zum Beispiel können die Sensoren in zueinander orthogonalen Richtungen aufgereiht sein, und das erste Element und das zweite Element in entsprechenden orthogonalen Richtungen zueinander bewegbar sein, wobei jeder Richtung bzw. jedem Freiheitsgrad eine andere Funktion der vom Signalgeber angesteuerten Vorrichtung zugeordnet sein kann.

In einer weiteren Ausgestaltung bilden die Mehrzahl der Sensoren ein zweidimensionales Sensorfeld, welches z.B. auf einem orthogonalen Raster verteilt sein kann. Hierdurch kann eine relative Verlagerung von erstem und zweitem Element in beliebige Richtungen in einer Ebene erkannt werden, so dass z.B. jeder Richtung eine andere Funktion der vom Signalgeber angesteuerten Vorrichtung zugeordnet sein kann oder z.B. zueinander orthogonalen Richtungen jeweils eine Funktion zugeordnet ist, während in den zwischenliegenden Winkelbereichen beide Funktionen anteilig zugleich angesteuert werden.

Bevorzugt verändert, insbesondere vergrößert sich die Breite der aktiven Fläche der Sensoren mit zunehmendem Abstand von der Strahlungsquelle. Da sich die auf die Sensoren einfallende Lichtmenge in Abhängigkeit vom Betrag der relativen Verlagerung zwischen erstem und zweitem Element verändert und sich somit auch das vom entsprechenden Sensor abgegebene Signal ändert, z.B. dessen Spannung oder elektrischer Widerstand, lässt sich der Betrag der relativen Verlagerung quantitativ proportional auswerten.

Bevorzugt sind die Strahlungsquelle und die Sensoren im Wesentlichen auf einer gemeinsamen Ebene angeordnet, insbesondere auf einem gemeinsamen Substrat angebracht. Das Anordnen der Strahlungsquelle und der Sensoren auf einem gemeinsamen Substrat oder einer gemeinsamen Platine vereinfacht die Herstellung. Zudem ist die relative Position zwischen Strahlungsquelle und Sensoren auf dem Substrat geometrisch vorgegeben, so dass bei einem eventuellen Austausch des Substrats keine gesonderten Nacheichungen erforderlich sind.

Um unerwünschte Störungssignale der Sensoren durch ungewünschte direkte Einstrahlung von der Strahlungsquelle auf die Sensoren zu vermeiden, ohne die Empfindlichkeit der Sensoren verringern zu müssen, kann die zumindest eine Strahlungsquelle mittels einer Blende zumindest einem der Sensoren abgeschirmt sein.

Bevorzugt ist die Strahlungsquelle zwischen zumindest zwei der Sensoren angeordnet. Dies ergibt eine symmetrische Anordnung der Sensoren relativ zur Strahlungsquelle, was eine Erfassung der relativen Verlagerung von zwischen erstem und zweitem Element in zwei Richtungen von der Strahlungsquelle weg erlaubt, mit entsprechend gleicher Signalstärke in jeder Richtung, was die Signalauswertung der Sensorsignale proportional zur relativen Verlagerung zwichen erstem und zweitem Element erleichtert.

Bevorzugt sind eine Mehrzahl von ggf. unabhängig angesteuerten Strahlungsquellen nebeneinander angeordnet, wobei insbesondere in einer Auswerteschaltung anhand der Sensorsignale und/oder anhand eines Vergleichs der durch die jeweiligen Strahlungsquelle fließenden Ströme festgestellt wird, dass, wenn eine der Strahlungsquellen nicht oder nicht richtig arbeitet, ein Fehlersignal ausgegeben wird. Bei Ausfall einer Strahlungsquelle kann der Signalgeber noch weiter funktionsfähig bleiben, da die verbleibende Strahlungsquelle oder die verbleibenden Strahlungsquellen die Funktion des Signalgebers aufrechterhalten. Auch besteht die Möglichkeit, dann, wenn z.B. eine der Strahlungsquellen ausfällt, dies anhand der geringeren Strahlungsintensität an den Sensoren zu erkennen und z.B. ein Fehlersignal auszugeben, wodurch z.B. die vom Signalgeber angesteuerte Vorrichtung in einen Not-Stopp-Zustand versetzt wird.

Bevorzugt ist das Strahlenumlenkelement mit Abstand gegenüber der Strahlungsquelle und den Sensoren angeordnet. Hierdurch wird ein großer Anteil der von der Strahlungsquelle abgegebenen Strahlung auf den oder die Sensoren umgelenkt, was die Ansprechempfindlichkeit erhöht und an den Sensoren für hohe Signalstärken sorgt.

Bevorzugt weist das erste Element ein die zumindest eine Strahlungsquelle und die Sensoren haltendes und das Strahlenumlenkelement umgebendes Gehäuse auf, an dem das insbesondere als Handbedienungselement ausgestattete zweite Element bewegbar, insbesondere schwenkbar gelagert ist. Das erste Element bildet somit eine geschlossene Einheit, die das Eindringen von Fremdkörpern verhindert, die die Strahlungswege beeinflussen könnten. Ferner ist keine gesonderte Lagerung des zweiten Elements erforderlich, insbesondere dann, wenn dieses als Handbedienungselement ausgestaltet ist, etwa als Handhebel, Wippschalter, Joystick oder Ähnlichem.

Grundsätzlich besteht die Möglichkeit, das zweite Element über Zwischengelenke oder Übersetzungen mit dem Strahlenumlenkelement zu verbinden, falls dies aufgrund der Geometrie der Schalterbaugruppe erforderlich sein sollte. Einfacher ist es jedoch, wenn das Strahlenumlenkelement an dem zweiten Element starr befestigt ist, wodurch jede noch so geringe Bewegung des zweiten Elements spielfrei und unmittelbar in eine entsprechende Bewegung des Strahlenumlenkelements umgesetzt wird, was die Empfindlichkeit und Auflösung des Signalgebers verbessert.

Bevorzugt ist, dass in einer durch elastische Vorspannung vorgegebenen Neutralstellung des zweiten Elements das Strahlenumlenkelement die von der Strahlungsquelle abgegebene Strahlung auf diese selbst zurückwirft, und insbesondere über der zumindest einen Strahlungsquelle zentriert ist. In der Neutralstellung wird die von der Strahlungsquelle ausgehende Strahlung auf diese selbst zurückgeworfen, so dass die Sensoren keine Signale abgeben, als Signaläquivalent für die Neutralstellung. Dies gestattet eine einfache Signalauswertung, in Verbindung mit einem mechanisch einfachen Aufbau.

Der zuletzt genannte Vorteil ergibt sich auch dann, wenn das zweite Element oder Strahlenumlenkelement um zumindest eine Achse schwenkbar ist, die zu von einer durch die Strahlungsquelle und zumindest einen der Sensoren definierte Ebene im Wesentlichen parallel ist, und hierbei das zweite Element in einer oder zwei oder mehr Richtungen relativ zum ersten Element schwenkbar ist.

Als weiterer, zusätzlicher Freiheitsgrad der Beweglichkeit des zweiten Elements oder Strahlenumlenkelements ist erfindungsgemäß vorgesehen, dass das zweite Element oder Strahlenumlenkelement um eine Achse herum drehbar ist, die eine durch die Strahlungsquelle und zumindest einen der Sensoren definierte Ebene schneidet, insbesondere senkrecht zu dieser ist, wobei das Strahlenumlenkelement derart ausgestaltet ist, dass es die von der Strahlungsquelle erhaltene Strahlung in Abhängigkeit vom Drehwinkel um diese Achse auf verschiedene der Sensoren lenkt. Hierdurch erzeugt auch eine Drehung des zweiten Elements, um volle 360° oder weniger, um diese Achse ein entsprechende Signalmuster in den jeweils zugeordneten Sensoren.

Bevorzugt bildet das Strahlenumlenkelement einen einzigen Reflektor, der je nach relativer Stellung zwischen dem ersten Element und dem zweiten Element bzw. Strahlenumlenkelement die von der Strahlungsquelle oder den Strahlungsquellen abgegebene Strahlung zu dem Sensor oder einer Gruppe von Sensoren oder von diesen weg umlenkt. Bei dem Reflektor kann es sich um einen ebenen oder konkav oder konvex gekrümmten Reflektor oder Spiegel handeln, der ggf. teilweise nicht reflektierend ausgestattet ist, um auch eine Drehung des zweiten Elements oder Strahlenumlenkelements um die Achse, welche die durch die Strahlungsquelle und den Sensor definierte Ebene schneidet, detektieren zu können. Alternativ sind auch Prismen, Linsenbaugruppen oder Ähnliches denkbar, sofern sie zum Umlenken der Strahlung von der Strahlungsquelle auf den oder die Sensoren in der Lage sind.

Die Anwendung des Signalgebers unterliegt an sich keiner besonderen Beschränkung. Bevorzugt ist aber die Verwendung des Signalgebers in einem Fernsteuerungsbedienungselement, zur Fernsteuerung einer Maschine, insbesondere drahtlosen Fernsteuerung, wie etwa einer Baumaschine oder eines Krans.

Die Erfindung wird nachfolgend anhand von Ausführungsbeispielen unter Hinweis auf die beigefügten Zeichnungen näher erläutert.
- Fig. 1: zeigt eine Schnittansicht durch einen Signalgeber gemäß einem ersten Vergleichsbeispiel als Wippschalter mit doppelten Sensorreihen;
- Fig. 2: zeigt eine Draufsicht der die LED und die Sensoren tragenden Platine von Fig. 1;
- Fig. 3: ist eine Perspektivansicht von Fig. 2;
- Fig. 4: ist eine Variante von Fig. 1 mit veränderter Lage der Schwenkachse des Bedienungselements in der Neutralstellung und einfachen Sensorreihen;
- Fig. 5: entspricht Fig. 4, jedoch in verschwenkter Stellung des Bedienungselements;
- Fig. 6: zeigt eine Perspektivansicht der Platine und des Bedienungselements von Fig. 5;
- Fig. 7: zeigt einen Signalgeber gemäß einem Ausführungsbeispiel der Erfindung, bei dem das Bedienungselement am Gehäuse über ein Kugelgelenk allseits schwenkbar und darüber hinaus um seine Längsachse herum drehbar ist;
- Fig. 8: zeigt eine Draufsicht der die LED und die Sensoren tragenden Platine von Fig. 7;
- Fig. 9: ist eine Perspektivansicht von Fig. 8;
- Fig. 10: zeigt eine Draufsicht der die LED und die Sensoren tragenden Platine gemäß einer weiteren Variante;
- Fig. 11: zeigt eine Draufsicht der mehrere LEDs und eine Sensorenmatrix tragenden Platine gemäß einer weiteren Variante; und
- Fig. 12: zeigt eine Perspektivansicht der Platine von Fig. 11.

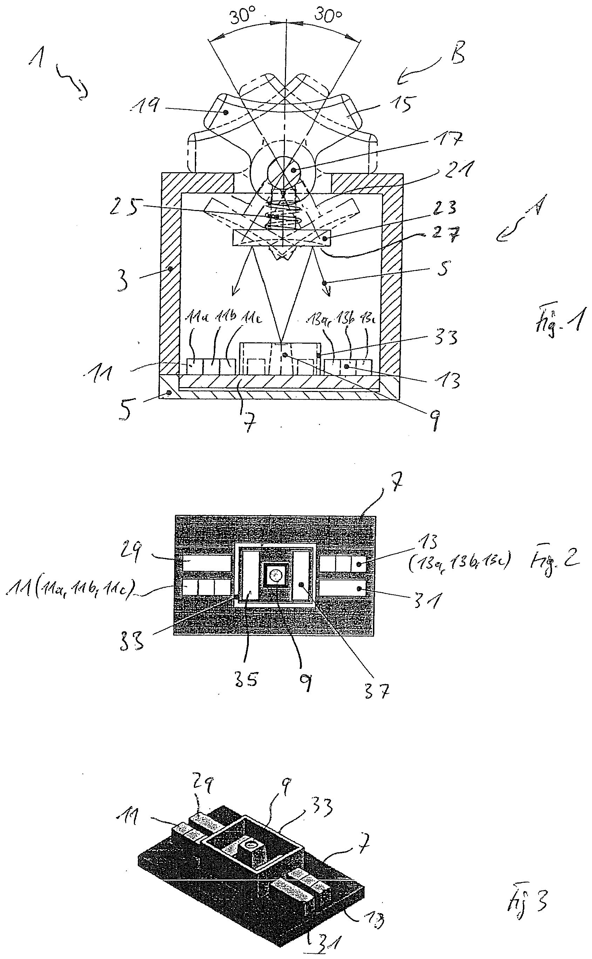

Fig. 1 zeigt eine Schnittansicht durch einen Schalter oder Signalgeber 1 gemäß einem ersten Vergleichsbeispiel, mit einem kastenförmigen Gehäuse 3, auf dessen Bodenplatte 5 eine Platine 7 befestigt ist, die auf ihrer zur Gehäuseinnenseite weisenden Seite mittig eine nach oben strahlende Strahlungsquelle 9, hier in Form einer LED (Licht emittierende Diode), trägt und ferner linear beiderseits der LED 9 eine jeweilige Reihe von ersten und zweiten Sensorgruppen 11, 13 trägt, jeweils gebildet aus z. B. drei Sensoren 11a, 11b, 11c und 13a, 13b, 13c. Das Gehäuse 3 mit der Platine 7 und den darauf angebrachten Elementen 9, 11 und 13 bilden das erste Element A.

An der Oberseite des Gehäuses 3, gegenüber der Platine 7 und mit Abstand davon, ist, hier zentriert über der LED 9, ein Handbedienungselement 15 in der Form eines Wippschalters um eine Achse 17 herum schwenkbar gelagert, mit einem außerhalb des Gehäuses 3 angeordneten Bedienungsabschnitt 19, und einer ins Gehäuseinnere ragenden stielförmigen Verlängerung 21. Die Achse 17 erstreckt sich orthogonal zur Reihenrichtung der Sensorgruppen 11, 13.

Das untere Ende der Verlängerung 21 trägt eine Scheibe 23. Zwischen deren Oberseite und der gegenüberliegenden Innenseite des Gehäuses 3 ist eine die Verlängerung 21 umgebende Druckfeder 25 eingespannt, die das Bedienungselement 15 in seine mittige Neutralstellung vorspannt, in der die Scheibe 23 parallel zur Ebene der Platine 7 ist. Die zur Platine 7 weisende Unterseite der Scheibe 23 bildet oder trägt einen ebenen oder konkav gewölbten Reflektor 27, mit Abstand von der LED 9 und den Sensoren 11, 13 auf der Platine 7.

Das Bedienungselement 15 samt Verlängerung 21, Scheibe 23 und Reflektor 27 bilden gemeinsam das zweite Element B. In der Neutralstellung wird die von der LED 9 abgegebene Strahlung S, z.B. sichtbares Licht oder Infrarotstrahlung, auf diese selbst zurückgeworfen, ohne dass sie eine der Sensorgruppen 11, 13 erreicht.

Wird nun das Bedienungselement 15 um die Achse 17 aus der Neutralstellung heraus seitlich verschwenkt, z.B. um einen Winkel von jeweils maximal 25° bis 35°, insbesondere 30°, bewegt sich auch der Reflektor 27 aus seiner Neutralstellung heraus, so dass die von der LED 9 abgegebenen Lichtstrahlen S so umgelenkt werden, dass sie auf eine der Sensorgruppen 11, 13 fallen, derart, dass, je stärker der Winkelausschlag des Bedienungselements und somit des Reflektors 27 ist, jene Sensoren 11a, 11b, 11c, 13a, 13b, 13c der jeweiligen Sensorgruppen 11, 13 bestrahlt werden, die einen zunehmend größeren Abstand von der LED 9 haben. Durch eine entsprechende Auswertung der entstehenden Sensorsignale lässt sich die Betätigungsrichtung und der Betätigungsbetrag des Bedienungselements 15 ermitteln. Zum Beispiel sind die Sensoren so ausgestaltet, dass sie ihren elektrischen Widerstand oder die von ihnen abgegebene elektrische Spannung in Abhängigkeit von der Stärke des Lichteinfalls ändern.

Wie in den Fig. 2 und 3 gezeigt, erstrecken sich parallel neben den beiden beiderseits der LED 9 angeordneten Sensorgruppen 11, 13 zusätzliche Sensoren 29, 31, welche im Normalfall, je nach Auslenkung des Reflektors 27, gleichzeitig mit den jeweils benachbarten Sensorgruppen 11, 13 bestrahlt werden. Falls dies nicht so ist, wird aus einem Vergleich der Signale dieser Sensoren in einer nicht gezeigten Signalauswerteschaltung festgestellt, dass der Signalgeber 1 fehlerhaft ist und ein entsprechendes Fehlersignal ausgegeben. Hier ist die Länge eines solchen zusätzlichen Sensors 29, 31 gleich der Gesamtlänge einer jeweiligen Sensorgruppe 11, 13.

Die LED 9 ist von einer oben offenen Blende 33 umgeben, welche die LED 9 von den Sensoren 11, 13, 29, 31 abschirmt.

Die Lagerung des Bedienungselements 15 am Gehäuse 3 kann gas- und/ oder wasserdicht ausgeführt sein, z.B. mit Hilfe von nicht gezeigten Dichtungen oder Dichtmanschetten, oder auch Präzisionsführung und Fettschmierung. Der Boden 5 des Gehäuses ist mit dem Gehäusekörper 3 hermetisch verbunden, so dass der Innenraum des Gehäuses vor Licht, Feuchtigkeit und Staub abgeschirmt ist.

Im Beispiel von Fig. 1 ist der Bedienungsabschnitt 19 über die Verlängerung 21 mit der Scheibe 23 einstückig ausgeführt. Auch besteht aber die Möglichkeit, den Bedienungsabschnitt mit dem Reflektor 27 mittels einer mechanischen Übersetzung zu koppeln, so dass der Winkelausschlag der Scheibe 23 und somit des Reflektors 27 relativ zum Winkelausschlag des Bedienungsabschnitts 19 vergrößert wird, oder ggf. auch verkleinert wird, falls erforderlich.

Im Beispiel der Fig. 1 bis 3 befinden sich innerhalb der Abschirmung 33, in Richtung der jeweiligen Sensoren 11, 13, 29, 31 beiderseits neben der LED 9, zusätzliche Sensoren 35, 37, welche auch in der Neutralstellung des Bedienungselements 15 bestrahlt werden, um dauerhaft die Funktionsfähigkeit des Signalgebers 1 überwachen zu können, auch wenn dieser nicht bedient wird.

Das von der LED 9 abgestrahlte Licht wird somit am Reflektor 27 reflektiert und in Abhängigkeit von der Winkelstellung des Bedienungselements 15, z.B. ± 25 - 35°, auf die jeweiligen Sensoren 11, 13, 29 und 31 anteilig reflektiert. Hierdurch geben zumindest die Sensorgruppen 11, 13 ein vom jeweiligen Lichteinfall abhängiges elektrisches Signal ab, welches reproduzierbar und proportional zum Lichteinfall und der Winkelstellung des Reflektors 27 ist. Diese Proportionalität kann von vornherein linear sein oder auch nicht linear und kann ggf. in der Signalauswerteschaltung durch Software linearisiert oder anderweitig codiert werden.

Die Sensoren 11, 13, 29, 31, 35, 37 sind hier so ausgestaltet, dass sie das einfallende Licht proportional in die jeweiligen Signale umwandeln, d. h. Spannungen, Ströme oder elektrische Widerstandswerte, welche reproduzierbar eine Funktion des Lichteinfalls und somit der Winkelstellung des Reflektors 27 darstellen.

Hier sind, beiderseits der LED 9, die Sensoren jeweils mindestens zweifach vorhanden (Sensoren 13, 29 auf der einen Seite der LED 9 und die Sensoren 11, 31 auf der anderen Seite), um für eine Fehlersicherheit bei der Richtungserkennung zu sorgen. Zum Beispiel können die zusätzlichen Sensoren 29, 31 nur für die Richtungserkennung ausgewertet werden, und die Sensorgruppen 11, 13 jeweils in Bezug auf den Betrag der Winkelverlagerung des Reflektors 29. Abgesehen von der oben erläuterten Möglichkeit, die Signale der jeweiligen nebeneinander liegenden Sensoren 11, 29 einerseits und 13, 31 andererseits miteinander zu vergleichen und auf Identität auszuwerten, besteht auch die Möglichkeit, bei Nichtübereinstimmung ein Fehlersignal zu erzeugen.

Auch besteht die Möglichkeit, die jederseits der LED 9 angeordneten Sensoren 11, 29 und 13, 31 aus jeweils unterschiedlich hergestellten Sensoren aufzubauen, um systematische Fehler auszuschließen, die z.B. auftreten können, wenn sämtliche Sensoren einer Fertigungscharge den gleichen Fehler aufweisen, der aber bei der Herstellung noch nicht erkennbar ist und sich erst im Laufe des Betriebs auswirkt.

Bevorzugt wird die LED 9 zyklisch mit Spannung oder Strom versorgt, zum einen deswegen, um die Leistungsaufnahme gering zu halten und auch deswegen, weil die Signalverarbeitung und -übertragung nur in diskreten, vergleichsweise längeren Zeitabschnitten erfolgen soll. Geeignet wäre z.B. ein kurzer Spannungs- oder Stromstoß, der dann in gleicher Weise in den das Licht erhaltenden Sensoren 11, 13, 29, 31, 35, 37 detektiert werden kann.

Die Pause zwischen den Stößen, in denen kein Licht abgegeben wird, kann dazu benutzt werden, die gesamte Auswertesensorik samt der nachfolgenden Signalauswerteschaltung neu auf einen Nullpunkt abzugleichen, um z.B. etwaige Alterungsvorgänge zu kompensieren.

Obwohl im obigen Vergleichsbeispiel der Fig. 1 bis 3 nur eine LED 9 gezeigt ist, kann es sich hierbei auch um eine Gruppe von mehreren LEDs handeln, um die Funktionssicherheit zu erhöhen.

Der Reflektor 27 kann lediglich als reflektierende Oberfläche ausgestaltet sein, etwa einer spiegelnden oder glattpolierten Oberfläche. Zum Beispiel als einfache plane Fläche, oder auch mit einer bestimmten Formgebung, die eine bestimmte Lichtsignatur erzeugt, z.B. durch Fokussieren auf einen kleineren Ausleuchtungsbereich. Oder der Reflektor 29 kann so ausgestaltet sein, dass er einen quer zur Auslenkung gerichteten Leuchtbalken erzeugt, der nebeneinander liegende Sensoren 11a, 11b, 11c, 13a, 13b, 13c einer jeweiligen Gruppe 11, 13 stärker bevorzugt als davor und dahinter liegende Sensoren 11a, 11b, 11c, 13a, 13b, 13c innerhalb der jeweiligen Sensorgruppe 11, 13.

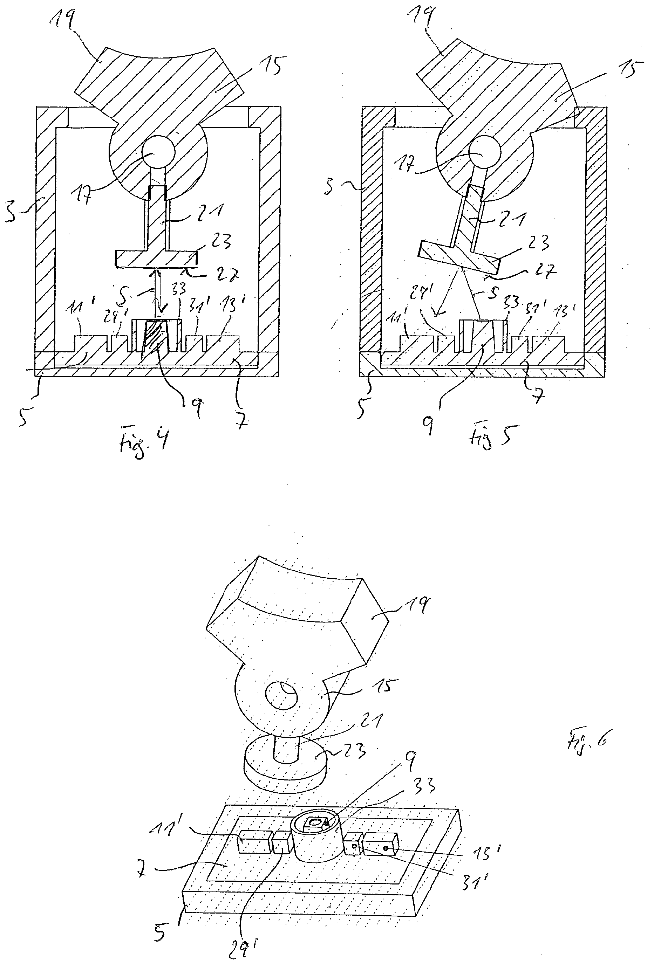

Die Fig. 4 bis 6 zeigen eine Variante des Vergleichsbeispiels der Fig. 1 bis 3, wobei für analoge Bauteile entsprechende Bezugszahlen wie in den Fig. 1 bis 3 verwendet werden. Abweichend vom obigen Beispiel ist hier die Achse 17 des Bedienungselement zur Gehäuseinnenseite hin verlagert. Ferner ist die Platine 7 einfacher bestückt, mit nur einer einzigen LED 9 in der Mitte, die wiederum von einer hier zylindrischen Blende 33 umgeben ist. Beiderseits der LED 9, auf einer gemeinsamen Linie liegend, sind, benachbart der LED 9 erste Sensoren 29', 31' angeordnet, zur Feststellung der Auslenkrichtung des Reflektors 27 relativ zur LED 9, und dahinter, an der von der LED 9 abgelegenen Seite, jeweilige Sensoren 11', 13' - diese können jeweils auch aus Sensorgruppen ähnlich wie im Beispiel der Fig. 1 bis 3 ausgestaltet sein -, aus deren Signalen der Auslenkbetrag des Reflektors 27 ermittelt wird, im Sinne einer proportionalen Auswertung.

Ansonsten gleicht diese Ausführung jener der Fig. 1 bis 3, so dass eine weitere Erläuterung weggelassen wird.

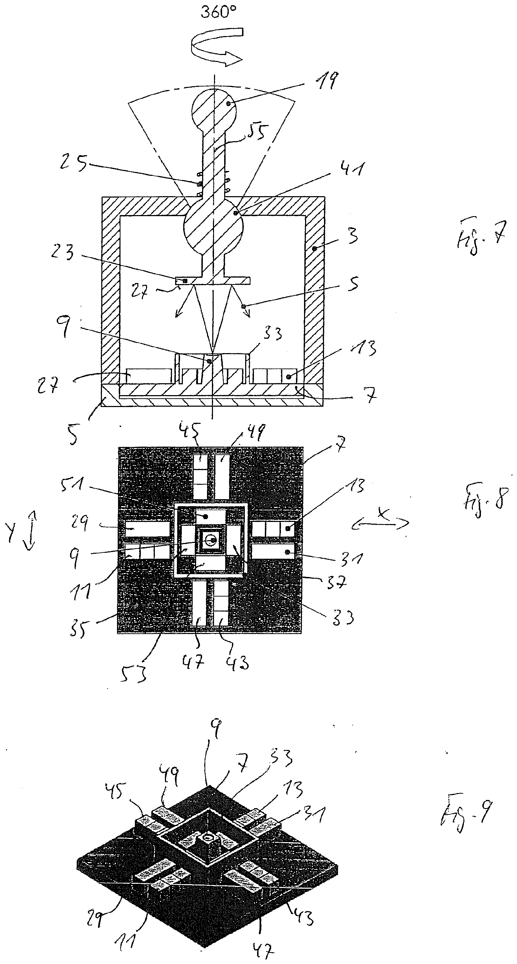

Die Fig. 7 bis 9 zeigen eine Ausführungsform der Erfindung, die gegenüber dem Vergleichsbeispiel der Fig. 1 bis 3 dem Bedienungselement zusätzliche Freiheitsgrade lässt und die Platine 7 mit entsprechenden Sensoren ausgestattet ist, um diese zusätzlichen Bewegungsmöglichkeiten des Bedienungselements 15 erfassen zu können.

Hier ist das Bedienungselement 15 am Gehäuse 3 mit Hilfe eines Kugelgelenks 41 allseits beweglich gelagert, so dass der aus dem Gehäuse 3 vorstehende Bedienungsabschnitt 19 nach Art eines Joysticks in alle Richtungen bewegbar ist.

Auf der Platine 7 sind, zusätzlich zu den Sensorgruppen 11, 13, 29, 31 der Ausführung der Fig. 1 bis 3 ähnlich gebaute weitere Sensorgruppen 43, 45, 47, 49 orthogonal zu der erstgenannten Sensorgruppe 11, 13, 29, 31 angeordnet, mit entsprechenden zusätzlichen Sensoren 51, 53 innerhalb der Abschirmung 33 zwischen der LED 9 und den jeweiligen zusätzlichen Sensorgruppen 43, 47 einerseits und 45, 49 andererseits. Die Platine ist hier quadratisch und in zueinander orthogonalen Richtungen symmetrisch, die durch die Erstreckungsrichtung der jeweiligen Sensorreihen vorgegeben sind.

Bewegt man das Bedienungselement 15 in der Ebene von Fig. 7 entsprechend der in Fig. 8 angegebenen X-Richtung, erkennen die Sensoren 11, 13 sowie 29 und 31 die entsprechende Schwenkrichtung des Reflektors 27 aus der Neutralstellung heraus und den jeweiligen Auslenkbetrag, durch Auswertung der Signale der jeweiligen Sensorgruppen 11 und 13.

Bei entsprechender Bewegung des Bedienungselements 15 senkrecht zur Blattebene von Fig. 7, entsprechend der Richtung Y in Fig. 8, erkennen die zusätzlichen Sensoren 47, 49 die jeweilige Auslenkrichtung und die Sensorgruppen 43 und 45 den jeweiligen Auslenkbetrag. Wird das Bedienungselement 15 in einer Ebene zwischen den Richtungen X und Y bewegt, werden die diesen Richtungen entsprechenden Sensorgruppen überlagert gemeinsam angesprochen, so dass aus den entstehenden Sensorsignalmustern sich auch die Bewegungen des Bedienungselements 15 in diesen Zwischenrichtungen erkennen lässt.

Darüber hinaus ist das Bedienungselement 15 um seine Längsachse 55 herum drehbar, wobei diese Längsachse 55 in der Neutralstellung des Bedienungselements 15 senkrecht zur Platinenebene 7 steht.

In diesem Fall ist der Reflektor 27 so ausgestaltet, dass er eine bestimmte Lichtsignatur erzeugen kann, wie oben angemerkt, so dass durch entsprechende Signalauswertung der jeweiligen Sensoren auch die Drehstellung des Bedienungselements 15 um die Achse 55 herum ausgewertet werden kann.

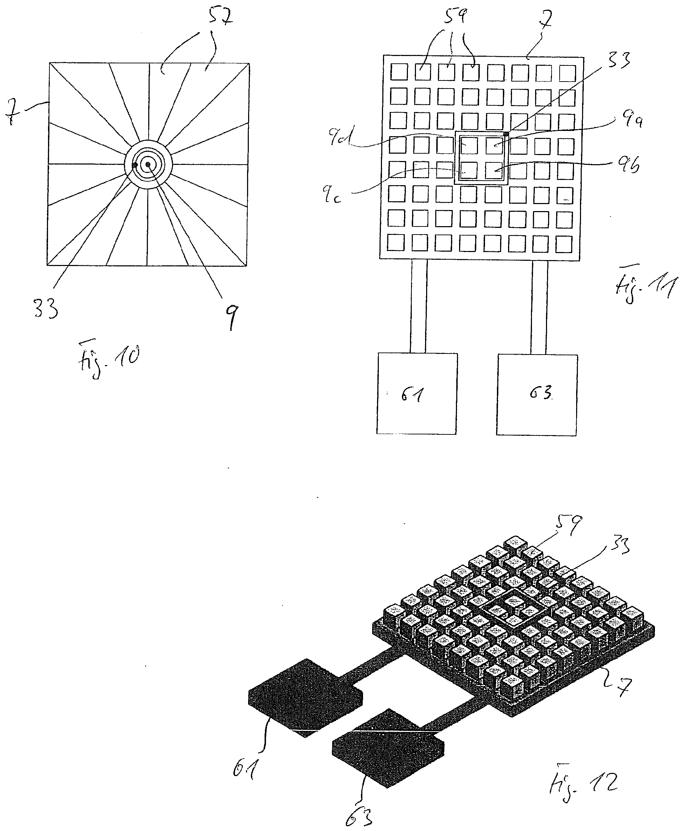

Fig. 10 zeigt eine Variante der Platine, mit zentral angeordneter LED 9 und sie umgebender Blende 33. Um die Blende 33 herum sind jeweilige diskrete Sensoren 57 strahlenförmig ausgebildet, zentriert um die LED 9. Diese Sensoren 27 sind spannungserzeugende Elemente, deren Umfangsbreite mit zunehmendem Abstand von der LED 9 größer wird und daher eine umso höhere Spannung abgegeben wird, je größer der Ausschlag des Reflektors 27 aus seiner Neutralstellung heraus ist.

Fig. 11 stellt eine weitere Variante der Platinenbestückung dar, mit einer Matrix aus einer Vielzahl aus einzelnen Sensorelementen 59, hier als 8 x 8-Matrix dargestellt, und zentralen vier Strahlungsquellen 9a, 9b, 9c, 9d, die von einer gemeinsamen Abschirmung 33 umgeben sind und den Neutralbereich darstellen, während die Abschirmung 33 diesen Neutralbereich von den sie umgebenden Sensoren 59 abschirmt. Durch die große Anzahl der Sensoren 59 wird zum einen die Winkelauflösung des Signalgebers erhöht, und darüber hinaus auch eine Mehrfachsicherheit gegen Ausfall erreicht, um an jeweils benachbarte Sensoren in der Matrix parallel auswerten und die entsprechenden Signale miteinander vergleichen.

Fig. 11 zeigt zwei entsprechende Signalauswerteschaltungen 61 und 63, wobei mit der ersten Auswerteschaltung 61 alle geradzahligen Sensorelemente 59 verbunden sind und mit der zweiten Auswerteschaltung 63 alle ungeradzahligen Sensorelemente. Dies erhöht die Sicherheit gegen Ausfall und gegen Fehlinterpretation der Sensorsignale. Bei Ausfall nur einiger der Sensoren bleibt die Lesbarkeit an sich erhalten, wobei aber dieser Ausfall vorzeitig erkannt werden kann und ein entsprechendes Fehlersignal ausgegeben werden kann und dann z.B. eine von dem Signalgeber angesteuerte Schaltung, wie etwa eine Maschine oder ein Kran, in einen Not-Stopp-Zustand versetzt werden kann.

## Patentansprüche

1. Signalgeber, mit einem ersten Element (A) und einem relativ zu diesem entlang mindestens einer relativen Bewegungsrichtung bewegbaren zweiten Element (B), wobei das erste Element (A) zumindest eine Strahlungsquelle (9) und eine Mehrzahl von auf die von der Strahlungsquelle (9) abgegebene Strahlung ansprechenden Sensoren (11, 13, 29, 31, 35, 37, 43, 45, 49, 49, 57, 59) aufweist, die in mindestens einer Richtung (X, Y) aufgereiht sind, die der mindestens einen relativen Bewegungsrichtung entspricht, und das zweite Element (B) ein Strahlenumlenkelement (27) aufweist, das dazu eingerichtet ist, die von der Strahlungsquelle (9) abgegebene Strahlung in Abhängigkeit von der relativen Stellung zwischen dem ersten Element (A) und dem zweiten Element (B) oder Strahlenumlenkelement (27) auf einen der Sensoren oder eine Teilgruppe der Sensoren hin zu lenken oder von dem Sensor oder der Teilgruppe von Sensoren weg zu lenken, um eine Verstellung des zweiten Elements (B) relativ zu dem ersten Element (A) entlang der mindestens einen relativen Bewegungsrichtung zu detektieren, **dadurch gekennzeichnet, dass** das zweite Element (B) oder Strahlenumlenkelement (27) relativ zum ersten Element (A) zusätzlich auch um eine Achse (55) herum drehbar ist, die eine durch die Strahlungsquelle (9) und zumindest einen der Sensoren definierte Ebene schneidet, insbesondere in einer Neutralstellung des zweiten Elements (B) senkrecht zu dieser ist, wobei das Strahlenumlenkelement (27) derart ausgestaltet ist, dass es die von der Strahlungsquelle (9) erhaltene Strahlung in Abhängigkeit vom Drehwinkel um diese Achse (55) auf verschiedene der Sensoren lenkt.

2. Signalgeber nach Anspruch 1, **dadurch gekennzeichnet, dass** die Mehrzahl der Sensoren (11, 13, 29, 31, 35, 37, 43, 45, 49, 49, 57, 59) in einer Reihe mit der Strahlungsquelle (9) angeordnet sind.

3. Signalgeber nach einem der Ansprüche 1 bis 2, **dadurch gekennzeichnet, dass** die Mehrzahl der Sensoren in zumindest zwei nebeneinander liegenden Reihen (11, 29; 13, 31; 43, 47; 45, 49) entlang jener Richtung aufgereiht sind, die der relativen Bewegungsrichtung zwischen dem ersten Element (A) und dem zweiten Element (B) oder Strahlenumlenkelement (27) entspricht, wobei insbesondere in einer Auswerteschaltung (61, 63) die von den Sensoren beider Reihen ausgegebenen Signale verglichen werden, und dann, wenn die verglichenen Signale außerhalb vorgegebener Toleranzen liegen, ein Fehlersignal ausgegeben wird.

4. Signalgeber nach einem der Ansprüche 1 bis 3, **dadurch gekennzeichnet, dass** die Mehrzahl der Sensoren (11, 13, 29, 31, 35, 37, 43, 45, 49, 49, 57, 59) in zumindest zwei sich in unterschiedliche Richtungen erstreckende Reihen (11, 29; 13, 31; 43, 47; 45, 49) gruppiert sind, und das erste Element (A) relativ zum zweiten Element (B) oder Strahlenumlenkelement (27) in Richtung der jeweiligen Reihen bewegbar ist.

5. Signalgeber nach einem der Ansprüche 1 bis 4, **dadurch gekennzeichnet, dass** die Mehrzahl der Sensoren (57, 59) ein zweidimensionales Sensorfeld bilden.

6. Signalgeber nach Anspruch 6, **dadurch gekennzeichnet, dass** die Sensoren (59) rasterartig verteilt sind.

7. Signalgeber nach einem der Ansprüche 1 bis 5, **dadurch gekennzeichnet, dass** sich die Breite der aktiven Fläche der Sensoren (57) mit zunehmendem Abstand von der Strahlungsquelle (9) verändert, insbesondere vergrößert.

8. Signalgeber nach einem der Ansprüche 1 bis 7, **dadurch gekennzeichnet, dass** die Strahlungsquelle (9) und die Sensoren (11, 13, 29, 31, 35, 37, 43, 45, 49, 49, 57, 59) im Wesentlichen auf einer gemeinsamen Ebene angeordnet sind, insbesondere auf einem gemeinsamen Substrat (7) angebracht sind.

9. Signalgeber nach einem der vorhergehenden Ansprüche, **dadurch gekennzeichnet, dass** die zumindest eine Strahlungsquelle (9) mittels einer Blende (33) von zumindest einem der Sensoren (11, 13, 29, 31, 35, 37, 43, 45, 49, 49, 57, 59) abgeschirmt ist.

10. Signalgeber nach einem der vorhergehenden Ansprüche, **dadurch gekennzeichnet, dass** die Strahlungsquelle (9) zwischen zumindest zwei der Sensoren angeordnet ist.

11. Signalgeber nach einem der vorhergehenden Ansprüche, **dadurch gekennzeichnet, dass** eine Mehrzahl von ggf. unabhängig angesteuerten Strahlungsquellen (9a, 9b, 9c, 9d) nebeneinander angeordnet sind, wobei insbesondere in einer Auswerteschaltung anhand der Sensorsignale und/oder anhand eines Vergleichs der durch die jeweiligen Strahlungsquellen (9a, 9b, 9c, 9c) fließenden Ströme festgestellt wird, dass eine der Strahlungsquellen nicht oder nicht richtig arbeitet, ein Fehlersignal ausgegeben wird.

12. Signalgeber nach einem der vorhergehenden Ansprüche, **dadurch gekennzeichnet, dass** das Strahlenumlenkelement (27) mit Abstand gegenüber der Strahlungsquelle (9) und den Sensoren (11, 13, 29, 31, 35, 37, 43, 45, 49, 49, 57, 59) angeordnet ist.

13. Signalgeber nach einem der vorhergehenden Ansprüche, **dadurch gekennzeichnet, dass** das erste Element (A) ein die zumindest eine Strahlungsquelle (9) und die Sensoren (11, 13, 29, 31, 35, 37, 43, 45, 49, 49, 57, 59) haltendes und das Strahlenumlenkelement (27) umgebendes Gehäuse (3) aufweist, an dem das insbesondere als Handbedienungselement ausgestattete zweite Element (B) bewegbar, insbesondere schwenkbar gelagert ist.

14. Signalgeber nach einem der vorhergehenden Ansprüche, **dadurch gekennzeichnet, dass** das Strahlenumlenkelement (27) an dem zweiten Element (B) starr befestigt ist.

15. Signalgeber nach einem der vorhergehenden Ansprüche, **dadurch gekennzeichnet, dass** in einer durch elastische Vorspannung vorgegebenen Neutralstellung des zweiten Elements (B) das Strahlenumlenkelement (27) die von der Strahlungsquelle (9) abgegebene Strahlung auf diese zurückwirft, und insbesondere über der zumindest einen Strahlungsquelle (9) zentriert ist.

16. Signalgeber nach einem der vorhergehenden Ansprüche, **dadurch gekennzeichnet, dass** das zweite Element (B) oder Strahlenumlenkelement (27) um zumindest eine Achse (17) schwenkbar ist, die zu der durch die Strahlungsquelle (9) und den zumindest einen der Sensoren definierten Ebene im Wesentlichen parallel ist.

17. Signalgeber nach einem der vorhergehenden Ansprüche, **dadurch gekennzeichnet, dass** das Strahlenumlenkelement (27) einen einzigen Reflektor bildet, der je nach relativer Stellung zwischen dem ersten Element (A) und dem zweiten Element (B) bzw. Strahlenumlenkelement (27) die von der Strahlungsquelle (9) abgegebene Strahlung zu einem der Sensoren oder einer Gruppe von Sensoren oder von diesem oder diesen weg umlenkt.

18. Fernsteuerungsbedienungselement zur insbesondere drahtlosen Fernsteuerung einer Maschine, insbesondere eines Krans, versehen mit einem Signalgeber (1) gemäß einem der vorhergehenden Ansprüche.

19. Verwendung eines Signalgebers nach einem der Ansprüche 1 bis 17 in einem Fernsteuerungsbedienungselement zur insbesondere drahtlosen Fernsteuerung einer Maschine, insbesondere eines Krans.

## Claims

1. Signal generator comprising a first element (A) and a second element (B) which is movable relative to said first element in at least one relative direction of movement, the first element (A) having at least one radiation source (9) and a plurality of sensors (11, 13, 29, 31, 35, 37, 43, 45, 49, 49, 57, 59) which are responsive to the radiation emitted by the radiation source (9) and are lined up in at least one direction (X, Y) corresponding to the at least one relative direction of movement, and the second element (B) having a radiation deflecting element (27) which, depending on the relative position between the first element (A) and the second element (B) or radiation deflecting element (27), is designed to direct the radiation emitted by the radiation source (9) towards one of the sensors or a subgroup of sensors, or to direct the radiation away from the sensor or subgroup of sensors, in order to detect a displacement of the second element (B) relative to the first element (A) in the at least one relative direction of movement, **characterised in that** the second element (B) or radiation deflecting element (27) is also rotatable relative to the first element (A) about an axis (55) which intersects a plane defined by the radiation source (9) and at least one of the sensors, and in particular is perpendicular to said plane in a neutral position of the second element (B),the radiation deflecting element (27) being designed such that it directs the radiation received from the radiation source (9) to different sensors, depending on the angle of rotation about said axis (55).

2. Signal generator according to claim 1, **characterised in that** the plurality of sensors (11, 13, 29, 31, 35, 37, 43, 45, 49, 49, 57, 59) are arranged in a row with the radiation source (9).

3. Signal generator according to either claim 1 or claim 2, **characterised in that** the plurality of sensors are lined up in at least two adjacent rows (11, 29; 13, 31; 43, 47; 45, 49) in the direction which corresponds to the relative direction of movement between the first element (A) and the second element (B) or radiation deflecting element (27), the signals output by the sensors of both rows being compared, in particular in an evaluation circuit (61, 63), and an error signal then being output if the compared signals are outside predetermined tolerances.

4. Signal generator according to any of claims 1 to 3, **characterised in that** the plurality of sensors (11, 13, 29, 31, 35, 37, 43, 45, 49, 49, 57, 59) are grouped in at least two rows (11, 29; 13, 31; 43, 47; 45, 49) which extend in different directions, and the first element (A) is movable relative to the second element (B) or radiation deflecting element (27) in the direction of the respective rows.

5. Signal generator according to any of claims 1 to 4, **characterised in that** the plurality of sensors (57, 59) form a two-dimensional sensor array.

6. Signal generator according to claim 6, **characterised in that** the sensors (59) are distributed in a grid-like manner.

7. Signal generator according to any of claims 1 to 5, **characterised in that** the width of the active surface of the sensors (57) changes, in particular increases, as the distance from the radiation source (9) increases.

8. Signal generator according to any of claims 1 to 7, **characterised in that** the radiation source (9) and the sensors (11, 13, 29, 31, 35, 37, 43, 45, 49, 49, 57, 59) are substantially arranged on a common plane, in particular are mounted on a common substrate (7).

9. Signal generator according to any of the preceding claims, **characterised in that** the at least one radiation source (9) is shielded from at least one of the sensors (11, 13, 29, 31, 35, 37, 43, 45, 49, 49, 57, 59) by means of a screen (33).

10. Signal generator according to any of the preceding claims, **characterised in that** the radiation source (9) is arranged between at least two of the sensors.

11. Signal generator according to any of the preceding claims, **characterised in that** a plurality of optionally independently controlled radiation sources (9a, 9b, 9c, 9d) are arranged adjacent to one another, it being determined, in particular in an evaluation circuit, based on the sensor signals and/or based on a comparison of the currents flowing through the respective radiation sources (9a, 9b, 9c, 9c), that an error signal is output when one of the radiation sources is not functioning or is not functioning correctly.

12. Signal generator according to any of the preceding claims, **characterised in that** the radiation deflecting element (27) is arranged at a distance from the radiation source (9) and the sensors (11, 13, 29, 31, 35, 37, 43, 45, 49, 49, 57, 59).

13. Signal generator according to any of the preceding claims, **characterised in that** the first element (A) has a housing (3) which holds the at least one radiation source (9) and the sensors (11, 13, 29, 31, 35, 37, 43, 45, 49, 49, 57, 59), and surrounds the radiation deflecting element (27), on which housing the second element (B), which is in particular provided as a hand-held element, is movably, in particular pivotably, mounted.

14. Signal generator according to any of the preceding claims, **characterised in that** the radiation deflecting element (27) is rigidly fastened to the second element (B).

15. Signal generator according to any of the preceding claims, **characterised in that**, in a neutral position of the second element (B) that is predetermined by resilient bias, the radiation deflecting element (27) reflects the radiation emitted by the radiation source (9) back to said source, and in particular is centred above the at least one radiation source (9).

16. Signal generator according to any of the preceding claims, **characterised in that** the second element (B) or radiation deflecting element (27) is pivotable about at least one axis (17) which is substantially parallel to the plane defined by the radiation source (9) and the at least one of the sensors.

17. Signal generator according to any of the preceding claims, **characterised in that** the radiation deflecting element (27) forms a single reflector which, depending on the relative position between the first element (A) and the second element (B) or radiation deflecting element (27), deflects the radiation emitted by the radiation source (9) towards or away from one of the sensors or a group of sensors.

18. Remote control operating element for in particular wireless remote control of a machine, in particular of a crane, which element is provided with a signal generator (1) according to any of the preceding claims.

19. Use of a signal generator according to any of claims 1 to 17 in a remote control operating element for in particular wireless remote control of a machine, in particular of a crane.

## Revendications

1. Emetteur de signal, avec un premier élément (A) et un second élément (B) mobile par rapport à celui-ci suivant au moins une direction relative de mouvement, dans lequel le premier élément (A) présente au moins une source de rayonnement (9) et une pluralité de capteurs (11, 13, 29, 31, 35, 37, 43, 45, 49, 49, 57, 59) réagissant au rayonnement émis par la source de rayonnement (9), qui sont alignés dans au moins une direction (X, Y) qui correspond à l'au moins une direction relative de mouvement, et le second élément (B) présente un élément de déviation de rayonnement (27) qui est adapté pour, en fonction de la position relative entre le premier élément (A) et le second élément (B) ou l'élément de déviation de rayonnement (27), diriger le rayonnement émis par la source de rayonnement (9) vers l'un des capteurs ou un sous-groupe des capteurs ou loin du capteur ou du sous-groupe de capteurs, pour détecter un déplacement du second élément (B) par rapport au premier élément (A) suivant l'au moins une direction relative de mouvement, **caractérisé en ce que** le second élément (B) ou l'élément de déviation de rayonnement (27) est en plus mobile en rotation par rapport au premier élément (A) autour d'un axe (55) qui croise un plan défini par la source de rayonnement (9) et au moins un des capteurs, est perpendiculaire à celui-ci en particulier dans une position neutre du second élément (B), dans lequel l'élément de déviation de rayonnement (27) est configuré de telle sorte qu'il dirige le rayonnement obtenu de la source de rayonnement (9) sur des capteurs différents en fonction de l'angle de rotation autour de cet axe (55).

2. Emetteur de signal selon la revendication 1, **caractérisé en ce que** la pluralité des capteurs (11, 13, 29, 31, 35, 37, 43, 45, 49, 49, 57, 59) sont agencés en une rangée avec la source de rayonnement (9).

3. Emetteur de signal selon l'une des revendications 1 et 2, **caractérisé en ce que** la pluralité des capteurs sont alignés en au moins deux rangées adjacentes (11, 29 ; 13, 31 ; 43, 47 ; 45, 49) suivant la direction qui correspond à la direction relative de mouvement entre le premier élément (A) et le second élément (B) ou l'élément de déviation de rayonnement (27), dans lequel en particulier dans un circuit d'évaluation (61, 63), les signaux émis par les capteurs des deux rangées sont comparés et, si les signaux comparés se situent hors de tolérances prédéterminées, un signal d'erreur est émis.

4. Emetteur de signal selon l'une des revendications 1 à 3, **caractérisé en ce que** la pluralité des capteurs (11, 13, 29, 31, 35, 37, 43, 45, 49, 49, 57, 59) sont regroupés en au moins deux rangées (11, 29 ; 13, 31 ; 43, 47 ; 45, 49) s'étendant dans des directions différentes, et le premier élément (A) est mobile par rapport au second élément (B) ou à l'élément de déviation de rayonnement (27) en direction des rangées respectives.

5. Emetteur de signal selon l'une des revendications 1 à 4, **caractérisé en ce que** la pluralité des capteurs (57, 59) forment un réseau de capteurs bidimensionnel.

6. Emetteur de signal selon la revendication 6, **caractérisé en ce que** les capteurs (59) sont répartis selon une grille.

7. Emetteur de signal selon l'une des revendications 1 à 5, **caractérisé en ce que** la largeur de la surface active des capteurs (57) varie, en particulier augmente, à mesure que s'accroît la distance par rapport à la source de rayonnement (9).

8. Emetteur de signal selon l'une des revendications 1 à 7, **caractérisé en ce que** la source de rayonnement (9) et les capteurs (11, 13, 29, 31, 35, 37, 43, 45, 49, 49, 57, 59) sont agencés sensiblement sur un même plan, en particulier sont placés sur un substrat commun (7).

9. Emetteur de signal selon l'une des revendications précédentes, **caractérisé en ce que** l'au moins une source de rayonnement (9) est isolée d'au moins un des capteurs (11, 13, 29, 31, 35, 37, 43, 45, 49, 49, 57, 59) au moyen d'un diaphragme (33).

10. Emetteur de signal selon l'une des revendications précédentes, **caractérisé en ce que** la source de rayonnement (9) est agencée entre au moins deux des capteurs.

11. Emetteur de signal selon l'une des revendications précédentes, **caractérisé en ce qu'**une pluralité de sources de rayonnement (9a, 9b, 9c, 9d) commandées le cas échéant de manière indépendante sont agencées les unes à côté des autres, dans lequel en particulier dans un circuit d'évaluation, à l'aide des signaux des capteurs et/ou à l'aide d'une comparaison des courants traversant les sources de rayonnement (9a, 9b, 9c, 9c) respectives, il est déterminé que, lorsqu'une des sources de rayonnement ne fonctionne pas ou ne fonctionne pas correctement, un signal d'erreur est émis.

12. Emetteur de signal selon l'une des revendications précédentes, **caractérisé en ce que** l'élément de déviation de rayonnement (27) est agencé à distance par rapport à la source de rayonnement (9) et aux capteurs (11, 13, 29, 31, 35, 37, 43, 45, 49, 49, 57, 59).

13. Emetteur de signal selon l'une des revendications précédentes, **caractérisé en ce que** le premier élément (A) présente un boîtier (3) maintenant l'au moins une source de rayonnement (9) et les capteurs (11, 13, 29, 31, 35, 37, 43, 45, 49, 49, 57, 59) et entourant l'élément de déviation de rayonnement (27), boîtier sur lequel le second élément (B), en particulier sous forme d'élément de commande manuel, est monté mobile, en particulier pivotant.

14. Emetteur de signal selon l'une des revendications précédentes, **caractérisé en ce que** l'élément de déviation de rayonnement (27) est fixé de manière rigide sur le second élément (B).

15. Emetteur de signal selon l'une des revendications précédentes, **caractérisé en ce que**, dans une position neutre du second élément (B) prédéterminée par précontrainte élastique, l'élément de déviation de rayonnement (27) réfléchit le rayonnement émis par la source de rayonnement (9) sur celle-ci, et en particulier est centré sur l'au moins une source de rayonnement (9).

16. Emetteur de signal selon l'une des revendications précédentes, **caractérisé en ce que** le second élément (B) ou l'élément de déviation de rayonnement (27) est orientable autour d'au moins un axe (17) qui est sensiblement parallèle au plan défini par la source de rayonnement (9) et l'au moins un des capteurs.

17. Emetteur de signal selon l'une des revendications précédentes, **caractérisé en ce que** l'élément de déviation de rayonnement (27) forme un unique réflecteur qui, selon la position relative entre le premier élément (A) et le second élément (B) ou l'élément de déviation de rayonnement (27), dévie le rayonnement émis par la source de rayonnement (9) vers un des capteurs ou un groupe de capteurs ou loin de celui-ci ou de ceux-ci.

18. Elément de commande à distance pour en particulier la commande à distance sans fil d'une machine, en particulier d'une grue, munie d'un émetteur de signal (1) selon l'une des revendications précédentes.

19. Utilisation d'un émetteur de signal selon l'une des revendications 1 à 17 dans un élément de commande à distance pour en particulier la commande à distance sans fil d'une machine, en particulier d'une grue.
